# EUROPEAN PATENT APPLICATION

(11) **EP 4 082 735 A1**
(43) Date of publication of application: **02.11.2022**
(21) Application number: 21170635.3
(22) Date of filing: 27.04.2021
(51) Int. Cl.: B28B 11/08, H01M 4/88, C04B 35/486, B29C 53/22, H01M 8/124

(54) **CORRUGATED GREEN SHEETS FOR THE PREPARATION OF LARGE-SIZED CERAMIC SHEETS AND RELATED METHODS AND USES**

(71) Applicant: DynElectro ApS, 4130 Viby Sjaelland (DK)
(72) Inventor: HØJGAARD JENSEN, Søren, 4621 Gadstrup (DK); LYCK SMITHSHUYSEN, Anne, 4621 Gadstrup (DK); LUND FRANDSEN, Henrik, 2970 Hørsholm (DK); SUDIREDDY, Bhaskar Reddy, 3450 Allerød (DK); EGSGAARD PEDERSEN, Thomas, 8200 Aarhus N (DK)
(74) Representative: Grünecker Patent- und Rechtsanwälte PartG mbB

(57) **Abstract**

This invention relates a non-sintered green sheet or tape comprising a corrugated surface having alternating crests and troughs arranged along both a first direction of the surface and a second direction of the surface, the second direction forming an angle of between 60° to 120° to the first direction, wherein the corrugation periods and/or corrugation amplitudes in the first direction differ from those in the second direction. The invention enables preparation of a reliable, large-sized ceramic sheet material, e.g. as a ceramic electrolyte layer for use in solid oxide cells, as a ceramic sheet for filter or membrane applications, or as sintering substrate or setter. In addition, sintered ceramic sheets and electrolytes, methods of preparation, and solid oxide cells (SOCs) making use of the non-sintered green sheet or tape are described.

## Description

### FIELD OF INVENTION

This invention relates to a non-sintered green sheet or tape comprising a corrugated surface, which enables preparation of a reliable, large-sized ceramic sheet material, which may be used as a ceramic electrolyte layer for use in solid oxide cells, as ceramic sheets in filter or membrane applications, or as sintering substrates or setters, for example.

In addition, the invention relates to sintered ceramic sheets and electrolyte sheets obtained from said green sheet or tape, as well as to solid oxide cells comprising the same.

### BACKGROUND OF THE INVENTION

In the recent years, solid oxide cell (SOC) technology has gained increased interest during the development and exploration of sustainable energy sources.

Solid oxide cells, which may include solid oxide fuel cells (SOFCs), solid oxide regenerative fuel cells (SORFCs) and solid oxide electrolyzer cells (SOECs), for example, comprise a dense electrolyte based on solid oxides, which is sandwiched between two electrodes, i.e. a fuel electrode and an oxygen electrode. The constitution of these components is specifically selected based upon electric and ionic conductivity, reactivity, stability and mechanical strength. While electrodes must be porous to enable gas-diffusion throughout the structure and simultaneously exhibit sufficient ionic and electronic conductivity, the solid electrolyte is characterized by a high ionic conductivity, a low electronic conductivity and gas-tight properties. For efficient and large-scale operation of SOCs, a so-called stack is constructed, where numerous single cells are arranged in series and/or in parallel to achieve the desired voltage and power output. Typically, substantially planar electrolyte sheets supporting cathodic and anodic electrode layers have been proposed for use in a number of different SOC configurations, including stacked designs, wherein each planar electrode/electrolyte sub-unit is bonded to and edge-supported by a framing manifold structure.

Under economical aspects, the material costs, particularly those related to the interconnector (IC), frame and sealant materials comprised in each repetition unit in a stack, make up a large portion of the expenditure in the manufacture and operation of SOC stacks. Therefore, it would be desirable to increase the footprint of the SOCs by enlarging the size of the electrode and electrolyte layers and hence reduce the total stack costs per kW.

However, increasing the cell dimensions is challenging, especially with respect to the electrolyte sheets or layers.

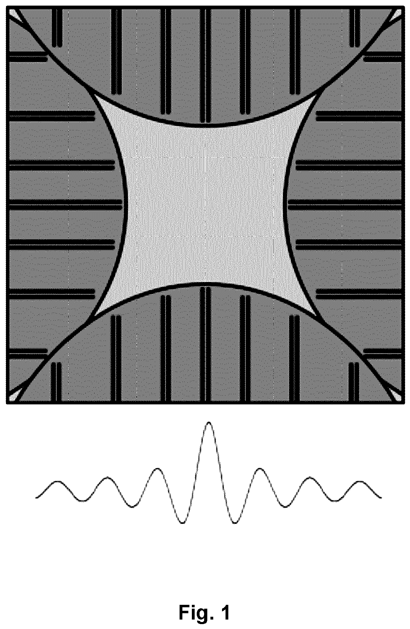

For instance, it is known to prepare a ceramic electrolyte sheet by a process including the steps of preparing a slurry containing a ceramic material powder, a binder and a dispersion medium, molding the slurry into a sheet (e.g., by a doctor blade, calendaring or extrusion process), drying the molded sheet to remove the dispersion medium through volatilization to thereby yield a green sheet, punching the green sheet into a predetermined shape, and sintering to provide the ceramic electrolyte sheet. Alternatively, green electrolyte sheets are sintered after stacking the same in a multilayer structure comprising one or more electrode layers (see EP 1 930 974 A1, for example). However, during sintering, flat green sheets undergo substantial shrinkage (typically to about 70% to 90% in length and to about 40% to 80% in area, relative to 100% of their original size) and tend to form bulges at the center portion and edge curls, which typically increase in amplitude towards the center of the edges, as is shown in Fig. 1, wherein the top view illustrates the area of bulge formation and the line-graph below illustrates the edge of the cell. This effect is presumably based on the adhesion of the green sheet on the substrate on which it is sintered, and is more pronounced the larger the cell area. The bulges and burrs at the edge portions substantially remain in the resulting ceramic sheet and may lead to cell defects and, in the worst case, cracking of the ceramic cells, especially under pressure in stack configuration. Moreover, uneven decomposition and emission speed of the organic binder within the green sheet surface during the sintering may lead to non-uniform shrinkage and further contribute to defects and fractures. In addition, since the edge curls tend to become larger with increasing sheet area, the sintered sheets often have to be cut to size to exhibit an acceptable flatness, which may overall result in a poor process yield.

It is known that corrugations can improve the mechanical strength and reduce in-plane stress in ceramic sheets of SOEC cells. In this context, US 2006/0003213 A1 and EP 1 113 518 A1 propose egg tray-type corrugations, for example. US 2004/0265663 A1 and US 2007/0273070 A1 disclose electrolyte sheets comprising indentations formed by embossing the green sheets prior to sintering in order to improve their mechanical stability at low thicknesses. However, the problem of avoiding bulge formation at the edges of large-sized ceramic sheets upon sintering has not been addressed at all.

Therefore, it remains desirable to provide a green sheet or tape which, when being subjected to sintering, results in a ceramic sheet without substantial bulges and/or burrs at its periphery even when being manufactured at large dimensions, and thus enables an increase of the SOC cell footprint and reduced stack costs without the danger of crack formation in the cell stack.

Moreover, there still exists a need to provide a method when enables inexpensive and simple production of large-sized ceramic sheets at high yield.

### SUMMARY OF THE INVENTION

The present invention solves these objects with the subject matter of the claims as defined herein. Further advantages of the present invention will be further explained in detail in the section below.

In one aspect, the present invention relates to a non-sintered green sheet or tape for the preparation of a ceramic sheet material, comprising a corrugated surface having alternating crests and troughs arranged along both a first direction of the surface and a second direction of the surface, the second direction forming an angle of between 60° to 120° to the first direction, wherein the corrugation periods and/or corrugation amplitudes in the first direction differ from those in the second direction.

In another aspect, the present invention relates to a method of manufacturing the aforementioned non-sintered green sheet or tape, comprising the steps of: a1) providing a non-corrugated, non-sintered green sheet or tape; a2) corrugating the non-sintered green sheet or tape to provide alternating crests and troughs arranged along the first direction of the surface of the non-sintered green sheet or tape; and a3) corrugating the non-sintered green sheet or tape to provide alternating crests and troughs arranged along the second direction of the surface of the non-sintered green sheet or tape; wherein steps a2) and a3) are performed in a roll-to-roll-process, or by conforming the non-sintered green sheet provided in step a1) to surface(s) of one or more prefabricated substrates comprising the corrugations in order to provide the corrugated, non-sintered green sheet or tape.

In an additional aspect, the present invention relates to a method of manufacturing a ceramic sheet material, comprising the steps of: a) providing a non-sintered green sheet or tape according to the aforementioned method; and b) subjecting the non-sintered green sheet or tape to a sintering step.

In further aspects, the present invention relates to a ceramic sheet material manufactured according to the aforementioned method, to an electrolyte sheet comprising said ceramic sheet material, and to a solid oxide cell comprising said electrolyte sheet.

In an additional aspect, the present invention relates to the use of the aforementioned non-sintered green sheet or tape for the preparation of an electrolyte sheet.

Preferred embodiments of the non-sintered green sheet or tape and other aspects of the present invention are described in the following description and the claims.

### BRIEF DESCRIPTION OF THE DRAWINGS

Fig. 1 illustrates the bulging of ceramic sheet and edge curling with increased area (top: top view; bottom: side view of edge profile).
Fig. 2 illustrates the principle of shrinkage compensation by corrugation during the sintering step, without movement of the contact points between the sheet and sintering substance.
Fig. 3A shows an exemplary corrugated green sheet according to the present invention, with sinusoidal profile.
Fig. 3B shows an exemplary corrugated green sheet according to the present invention, wherein the angle between the first and second direction deviates from 90° (in-plane ridges and furrows in sinusoidal form).
Fig. 4A illustrates the first step of an exemplary method of the present invention, wherein a roller mechanism conforms the green sheet surface to the surface of a first corrugation plate.
Fig. 4B illustrates the second step of an exemplary method of the present invention, wherein a roller mechanism conforms the green sheet surface to the surface of a second corrugation plate.
Fig. 5A is a photograph of a first 3-D printed corrugation plate used to provide corrugations in the first direction.
Fig. 5B is a photograph of a second 3-D printed corrugation plate used to provide corrugations in the first and second directions.
Figures 6A and 6B are photographs of the sintered sheet obtained in Comparative Example 1.
Fig. 7 is a photograph of the sintered sheet obtained in Example 2.
Fig. 8 is a photograph of the sintered sheet obtained in Example 3.
Fig. 9 is a graph showing the result of profilometric measurements of Examples 2 and 3.

### DETAILED DESCRIPTION OF THE INVENTION

For a more complete understanding of the present invention, reference is now made to the following description of the illustrative embodiments thereof:

### Non-Sintered Green Sheets and Tapes

In a first embodiment, the present invention relates to a non-sintered green sheet or tape for the preparation of a ceramic sheet material, comprising a corrugated surface having alternating crests and troughs arranged along both a first direction of the surface and a second direction of the surface, the second direction forming an angle of between 60° to 120° to the first direction, wherein the corrugation periods and/or corrugation amplitudes in the first direction differ from those in the second direction.

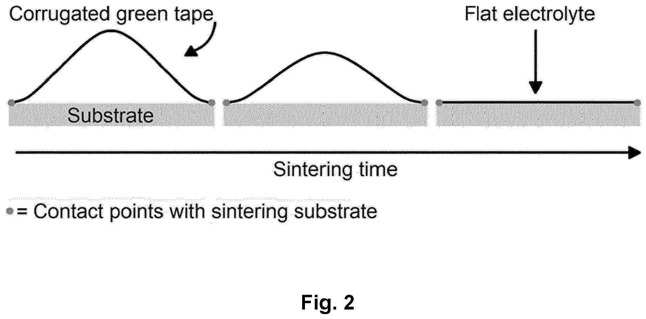

Advantageously, it has been found that the pre-corrugation of the green sheet allows the sheet to flatten during the sintering process, while the movement of the contact points between sheet and substrate and adhesion between the green sheet and the substrate are minimized. A simplified illustration of this effect in two dimensions is illustrated in Fig. 2. In consequence, favourably flat ceramic sheets without substantial bulges and/or burrs at the side edges can be obtained even when being manufactured at large dimensions. Accordingly, the horizontal shrinkage during the sintering process, which causes friction with the support that leads to tensile stress in the cell is compensated and bulging at the edges even of large-sized electrolytes may be avoided.

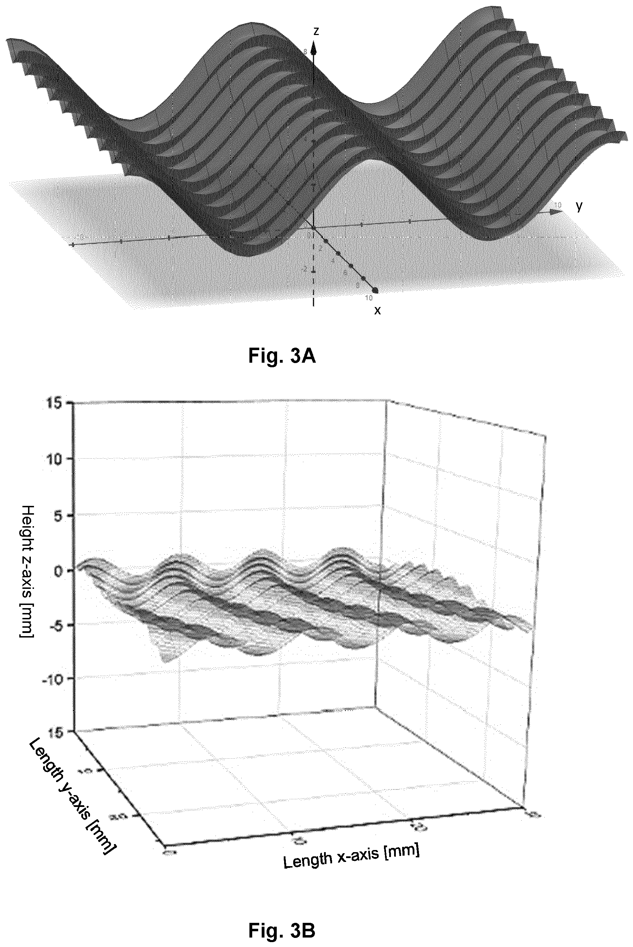

An exemplary corrugated surface, wherein both the corrugation periods and corrugation amplitudes in the first direction (y-axis) differ from (or are larger than) those in the second direction (x-axis) is illustrated in Fig. 3A. In general, the first and second directions are both in the x/y-plane, while the z-axis represents the thickness direction of the green sheet. The expression, "the second direction forming an angle of between 60° to 120° to the first direction", as used herein, refers to the angle between the first direction and the second direction within the x/y-plane. Said angle does not need to be constant throughout the entire surface of the green sheet or tape and may vary within the given range, e.g., in the form of a curve in the x/y-plane. As is illustrated in Fig. 3B, for example, the ridges and furrows may be arranged in form of sinusoidal waves in the x/y-plane. In-plane waves as those shown in Fig. 3B can be used to avoid straight lines in the sintered body, which may advantageously contribute to a reduction of thermochemical and/or thermomechanical stress and therefore improve the toughness of the sintered body. In other preferred embodiments, the angle between the first direction and the second direction ranges from 80° to 100°, more preferably from 85° to 95°, and is especially preferably about 90°.

When the corrugation period in the second direction is larger than the corrugation period in the first direction, it is preferred from the viewpoint of improved flattening upon sintering that the ratio of the corrugation period in the second direction to the corrugation period in the first direction is preferably at least 2:1, more preferably between 2:1 to 40:1, further preferably at least 2.2:1, even further preferably between 2.2:1 to 30:1, and especially preferably between 2.5:1 and 20:1, such as between 3:1 and 12:1. The wording "period", as used herein, denotes the distance between adjacent crests or adjacent troughs of the corrugation profile.

In further preferred embodiments, the corrugation period in the second direction is 25 mm or larger, preferably 30 mm or larger and/or the corrugation period in the first direction is smaller than 25 mm, preferably smaller than 20 mm.

The corrugation profile in the first and second direction is not particularly limited, and may independently comprise symmetric periodic waves (e.g., sine waves, square waves, triangle waves, or combinations thereof) and or asymmetric periodic waves (e.g. a sawtooth profile). The use of a sine wave profile for the corrugation in both directions is especially preferred.

When the corrugation amplitude in the second direction is larger than the corrugation amplitude in the first direction, further improved flattening is achieved when the ratio of the corrugation amplitude in the second direction to the corrugation amplitude in the first direction is at least 1.5:1, more preferably at least 1.8:1, further preferably at least 2:1, and especially preferably between 2:1 and 100:1, such as between 2:1 to 10:1. It will be understood that the wording "amplitude", as used herein, denotes the peak amplitude measured between crest and baseline (i.e. half of the total depth of the sheet profile).

In further preferred embodiments, the corrugation amplitude in the second direction is 5 mm or larger, preferably 7 mm or larger and/or the corrugation amplitude in the first direction is smaller than 5 mm, preferably smaller than 3 mm.

Particularly favourable matching between the shrinkage-to-plane and the sintering shrinkage may be achieved when both the corrugation periods and corrugation amplitudes in the first direction differ from those in the second direction, and preferably further satisfy the above-cited ranges. The shrinkage-to-plane of the corrugation pattern is preferably adjusted between 8% to 40%, more preferably between 15% and 38%, such as 20% to 37%.

The thickness (i.e. material thickness) of the non-sintered green sheet or tape is preferably substantially constant in order to obtain an ideally flat and uniform ceramic sheet without indentations. In further preferred embodiments, the thickness is in the range of 10 µm to 1 cm, further preferably from 30 µm to 0.7 cm, and especially preferably from 50 µm to 0.5 cm, such as from 70 to 220 µm, for example.

While the corrugation pattern is not necessarily provided over the entire surface of the non-sintered green sheet or tape, and may only cover 60%, 70%, 80% or 90% of the area, for example, the advantages of the present invention are most prominent when the entire surface is covered with the above-described corrugation pattern.

In general, the expression "green", as used herein, describes non-sintered and unfired material. In preferred embodiments, the green sheet or tape for the preparation of a ceramic sheet material according to the present invention has not been subjected to a heat treatment at 800°C or above, 600°C or above, or 400°C or above, after having been provided in sheet or tape form.

As long as sintering of the green material results in a ceramic sheet material, the composition of the green sheet or tape is not particularly limited. In preferred embodiments, the green sheet or tape comprises one or more pre-ceramic materials selected from zirconia, zirconates, alumina, aluminates, titania, titanates, silica, silicates, rare earth metals and/or their oxides, alkali metals and/or their oxides, alkaline earth metals and/or their oxides, steels, stainless steels, aluminides, intermetallics, aluminum and its alloys, the first, second, and third transition series of metals, their oxides, borides, nitrides, carbides, silicides, and/or combinations thereof in the form of a raw material powder. In further preferred embodiments, the green sheet or tape comprises one or more of zirconia (such as monoclinic zirconia (ZrO₂), for example), rare earth metals (e.g., yttrium, cerium, samarium, scandium or gadolinium) and/or their oxides (such as, e.g. Y₂O₃) as pre-ceramic material. As specific examples with favourable mobility of oxygen vacancies at elevated temperatures, and excellent stability in both reducing and oxidizing atmospheres, yttrium-stabilized zirconia (e.g. 3YSZ, 8YSZ), scandium-cerium stabilized zirconia (e.g., 6Sc1CeSZ, 10Sc1CeSZ), and yttrium-scandium stabilized zirconia (YScSZ) may be mentioned, among which yttrium-stabilized zirconia are particularly preferred in view of the cost and availability of high-quality raw materials. Especially preferred are zirconium oxides each having tetragonal and/or cubic structures, which are stabilized with 2 to 10 mol% of yttrium oxide. If desired, ceramic sheets can be made tougher by selecting certain toughening agents known to those skilled in this art (such as oxides of tantalum and niobium, for example).

Notably, the non-sintered green sheet or tape may have a multilayer structure with two or more layers, provided that the materials of the different layers are sufficiently compatible with respect to their adhesion and shrinkage behavior upon sintering. In such configurations, at least one, but not necessarily all sub-layers are required to comprise pre-ceramic materials. In other words, it is sufficient if one sub-layer forms a ceramic layer upon sintering.

Depending on the method of preparing the green sheets or tapes, optional additives selected from one or more of sintering aids, dispersants (e.g. polymer-based dispersants, such as polyvinylpyrrolidone; copolymers of butadiene with maleic anhydride, and ammonium salts thereof), coalescing agents, binders, plasticizers (such as glycols, e.g., propylene glycol, and glycol ethers), hardening agents, defoaming agents and solvents (e.g. organic solvents) are typically also included.

There is no particular limitation on the kind of binder to be used in the present invention, and known organic binders can appropriately be selected and used. Examples of the organic binders include ethylene copolymers, styrene copolymers, acrylate or methacrylate copolymers, vinyl acetate copolymers, maleic acid copolymers, vinyl butyral resins, vinyl acetal resins, vinyl formal resins, vinyl alcohol resins, waxes, and celluloses such as ethyl cellulose. These organic binders may be used alone or, if necessary, in appropriate combination of two or more kinds thereof. The ratio of raw material powder and binder to be used may preferably be in a range of 5 to 30 parts by mass, more preferably 10 to 20 parts by mass, of the latter, relative to 100 parts by mass of the former, which ensures sufficient strength and flexibility of the green sheet and simultaneously facilitates the viscosity adjustment in the slurry.

The solvent to be used in the production of the green sheet or tape may be appropriately selected by the skilled artisan and may inter alia include water; alcohols such as methanol, ethanol, 2-propanol, 1-butanol, and 1-hexanol; ketones such as acetone and 2-butanone; aliphatic hydrocarbons such as pentane, hexane, and butane; aromatic hydrocarbons such as benzene, toluene, xylene, and ethylbenzene; acetate esters such as methyl acetate, ethyl acetate, and butyl acetate; and the like. These solvents may be used alone or in appropriate combination of two or more kinds thereof. The amount of solvent may be suitably adjusted by the skilled artisan in dependence of the desired viscosity of the green material.

### Methods of Manufacturing of Corrugated Green Sheets or Tapes

In a second embodiment, the present invention relates to a method of manufacturing a non-sintered green sheet or tape according to the first embodiment, the method comprising the steps of: a1) providing a non-corrugated, non-sintered green sheet or tape; a2) corrugating the non-sintered green sheet or tape to provide alternating crests and troughs arranged along the first direction of the surface of the non-sintered green sheet or tape; and a3) corrugating the non-sintered green sheet or tape to provide alternating crests and troughs arranged along the second direction of the surface of the non-sintered green sheet or tape; wherein steps a2) and a3) are performed in a roll-to-roll-process, or by conforming the non-sintered green sheet provided in step a1) to surface(s) of one or more prefabricated substrates comprising the corrugations in order to provide the corrugated, non-sintered green sheet or tape. Advantageously, said method enables swift, continuous and inexpensive manufacturing of large-sized green sheets or tapes with the desired corrugation properties and at low thicknesses.

Regarding step a1), various methods for the preparation of non-corrugated and flexible green materials in sheet or tape form are known in the art (e.g., from US 4,710,227 A, EP 0 302 972 A1 and EP 0 317 676). In general, these are not particularly limited and may be suitably adopted to provide substrates to be subjected to corrugation according to the present invention. As an example, green sheet or tape may be prepared from a slurry comprising one or more pre-ceramic materials and optional additives selected from one or more of sintering aids, dispersants, coalescing agents, binders, plasticizers, hardening agents and solvents according to the description of the first embodiment. Subsequently, the slurry may be provided in sheet shape by methods including, but not limited to tape casting, doctor blade methods, calendar methods, extrusion methods, or the like. Optionally, the latter step may be followed by a drying step.

Thereafter, the corrugation profile as described in relation to the first embodiment is provided in steps a2) and a3), preferably by a method which involves as little stretching or squeezing as possible and thereby enables a substantially uniform material thickness throughout the resulting corrugated sheet. It is noted that the order of steps a2) and a3) is interchangeable and steps a2) and a3) may also be carried out simultaneously. However, in order to minimize deformation within the tape or sheet upon corrugation, a two-step approach is often preferred.

As mentioned above, steps a2) and a3) may be performed in a roll-to-roll-process. For instance, the cast green sheet or tape may be passed between rolls, wherein at least one of these rolls may be patterned and configured to bend the green sheet or tape to provide alternating crests and troughs arranged along the first direction of its surface. The crests and troughs arranged along the second direction of the green sheet surface may be provided by passing the sheet or tape between a further set of rolls.

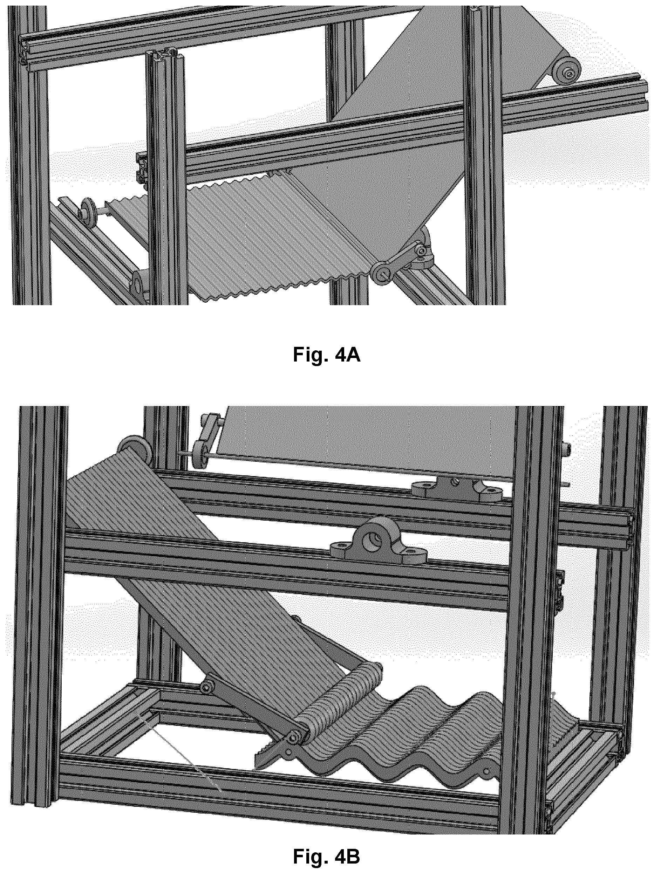

Alternatively, steps a2) and a3) may be performed by conforming the non-sintered green sheet provided in step a1) to surface(s) of one or more prefabricated substrates comprising the corrugations in order to provide the corrugated, non-sintered green sheet or tape. In a preferred embodiment, the one or more prefabricated substrates are corrugation plates, which may be prefabricated by a 3-D printing process, for example. Advantageously low undesired plastic deformation is achieved by conforming the non-sintered green sheet to the surface of a first corrugation plate comprising the alternating crests and troughs in accordance with the pattern along the first direction (corrugation profile with relatively small period and/or amplitude) and subsequently conforming the non-sintered green sheet to the surface of a second corrugation plate comprising the alternating crests and troughs in accordance with the pattern along both the first and the second directions (full corrugation pattern). The surfaces of the green sheet are preferably conformed to the surfaces of the prefabricated substrates via a roll mechanism. An example of the method is illustrated in Figures 4A (first corrugation plate) and 4B (second corrugation plate), wherein in the final corrugation step, the rolls are patterned so as to conform to the corrugation in the first direction (cf. Fig. 4B). Thus, undesirable stretching or squeezing and local thinning of the green sheet may be avoided. Accordingly, high-quality green sheets and tapes with the desired corrugation profile may be provided in a simple and inexpensive manner.

In embodiments, steps a2) and a3) may be performed at elevated temperatures (e.g. between 40°C and 120°C, or between 50°C and 85°C) to enhance the flexibility of the green tape or sheet during the corrugation process and hence enable improved conformability to the rolls and/or corrugation plates.

### Method of Manufacturing a Ceramic Sheet Material and SOC Electrolyte Sheets

In a third embodiment, the present invention relates to a method of manufacturing a ceramic sheet material, comprising the steps of: a) providing a non-sintered green sheet or tape according to the second embodiment; and b) subjecting the non-sintered green sheet or tape to a sintering step. The method enables manufacturing of large-sized ceramic sheets without the formation of bulges and curled edges that are normally observed upon sintering. Furthermore, since such defects and the related scrap are reduced, the manufacturing yield may be substantially improved.

In general, the sintering conditions in step b) will inter alia depend on the composition and constitution of the non-sintered green sheet and the desired properties of the ceramic sheet. However, if the ceramic sheet is intended for use as SOC electrolyte, the duration of the sintering process is preferably suitably selected by the skilled artisan to achieve a sufficient densification degree (% of the theoretical density), which correlates with the total electrical conductivity and gastightness of the electrolyte. In this respect, the target densification degree should be 95% or higher and the porosity of the ceramic sheet should be less than 5% to meet the requirements for a gastight electrolyte.

In general, however, it is preferable to perform sintering at temperatures above 800° C, more preferably above 1000° C, further preferably from 1100°C to 1900°C, and especially preferably from 1250°C to 1850°C; for a duration of about 1 hour or more, preferably at least 3 hours, more preferably between 6 and 20 hours, and especially preferably between 8 and 16 hours; and under an inert, oxidizing or reducing atmosphere, preferably under an oxidizing or reducing atmosphere.

During sintering, sheet or tape may be preferably constrained to reduce the lateral movement across the sintering substrate. For this purpose, weight(s) may be placed in the corner sections and preferably on one or more edge section(s) of the sheet or tape. In combination or alternatively, it is preferred to place a flat plate (preferably a porous ceramic plate, such as porous ceramic plates based on alumina, mullite/alumina, zirconia, cordierite or magnesia, for example) on the top surface of the sheet without damaging the corrugated surface, which favourably reduces lateral movement and results in improved flatness.

If necessary, a debindering step may be performed prior to the actual sintering in order to remove organic binders and volatile components in the green sheet or tape. For this purpose, a separate pre-heating step may be performed in advance (e.g., at about 300 to 500°C for about 30 to 300 minutes), or the ramp heating rate towards the sintering temperature plateau may be suitably adjusted to ensure debindering. While not being limited thereto, typical ramp heating rates range from 1 °C/h to 150°C/h.

### Ceramic Sheet Material

In a fourth embodiment, the present invention relates to a ceramic sheet material manufactured according to the third embodiment.

The wording "ceramic sheet material", as used herein, is understood to encompass multilayer sheets or composite films comprising two or more sub-layers, provided that at least one sub-layer is a ceramic layer. For instance, the ceramic sub-layer may be combined with a sub-layer comprising a different composition or structure.

As explained above, the ceramic sheet material exhibits a favourable flatness when being produced in a large size. In a preferred embodiment, the area of the ceramic sheet material is therefore 50 cm² or larger, preferably 100 cm² or larger, and more preferably 150 cm² or larger, such as 160 cm² or larger, 200 cm² or larger, 300 cm² or larger, 500 cm² or larger, 1000 cm² or larger, 1500 cm² or larger, or 2000 cm² or larger.

Typically, although the ceramic sheet material is flattened during the sintering process, the surface of the ceramic sheet material obtained according to the present invention may exhibit a surface with a residual corrugation structure, wherein the periods of the corrugations in the first direction and the second direction roughly correspond to those prior to the sintering (as defined in conjunction with the first embodiment above), but the amplitude of the corrugations is comparatively small. In this respect, the corrugation amplitude in the second direction after sintering is preferably 200 µm or less, more preferably less than 100 µm, and especially preferably less than 50 µm and/or the corrugation amplitude in the first direction after sintering is preferably 100 µm or less, more preferably less than 50 µm, and especially preferably less than 25 µm.

In addition, the ceramic sheet material preferably has a surface roughness Rₐ of less than 60 µm, more preferably 40 µm or less, especially preferably from 0.01 to 20 µm, such as from 0.1 to 10 µm, with Rₐ being measured according to ISO 4287:1997.

The ceramic sheet material according to the present invention may be used in a number of applications, including but not limited to chemical and material processing, dielectric and electrical insulating, or foundry and metal processing. Preferably, the ceramic sheet material is used in the fabrication of electrochemical devices (e.g. SOCs), photovoltaic cells (e.g. as a barrier layer in thin film solar cells), electronic devices, ceramic filters, ceramic membranes, sensors (e.g. as substrate sheet, protection sheet or membrane), setters, kiln furniture, sintering substrates, or wear protection pads.

### SOC Electrolyte Sheet

In a fifth embodiment, the present invention relates to an electrolyte sheet comprising the ceramic sheet material according to the fourth embodiment.

In embodiments, the electrolyte sheet may have a multilayer configuration comprising an arrangement of multiple ceramic sheet materials according to the fourth embodiment described above, albeit with different compositions.

The electrolyte sheet is a substantially non-porous (i.e., substantially without closed pores, porosity being less than 5%, preferably less than 3% more preferably less than 1%) body.

### Solid Oxide Cell (SOC)

In a sixth embodiment, the present invention relates to a solid oxide cell comprising the electrolyte sheet according to the fifth embodiment described above.

Solid oxide cells (SOCs), as described herein, may include electrochemical devices that can be used as either a solid oxide electrolyzer cell (SOEC), or as a solid oxide fuel cell (SOFC), depending on the direction of the current. The solid oxide cell may be capable of reversible operation. The cells may be combined to form a stack to increase the overall output.

The solid oxide cell (SOC) configuration comprises a cathode layer disposed on one side of the electrolyte sheet, and an anode layer disposed on the other side of the electrolyte sheet. Apart from that, the specific design of the SOC is not particularly limited any may include a segmented cell-in-series design, a monolithic design, and a flat plate design. The corrugated electrolyte sheets may be utilized in solid oxide fuel cells that are electrolyte-supported, anode- or cathode-supported, symmetric electrode-supported and/or in multilayer tape-casted cells, for example.

Exemplary SOCs may be prepared by tape casting of the fuel electrode, the electrolyte layer and a barrier layer (e.g. a CGO (cerium-gadolinium oxide) layer), for example. This can be done by either multilayer tape casting or via tape casting and subsequent lamination of the layers prior to co-sintering of the entire half-cells.

Furthermore, additional components known in the art may be used to fabricate the SOC, including interconnectors, frames, and sealant materials. Regarding interconnectors, a substantial portion on each side of the cell are typically dedicated for gas-channels and sealing materials. The size of the frames and the amount of glass sealant are typically roughly proportional to the cell area subtracted from the interconnector area. By increasing the side length, excess electrolyte and electrode materials may be reduced, as well as the amount of material used for interconnectors, end plates and framing and the amount of glass sealant, as well as the costs associated therewith. The present invention enables an increase of the side length of the cell and the active area (i.e. to an solid electrolyte area of 50 cm² or larger, preferably 100 cm² or larger, and more preferably 150 cm² or larger, such as 160 cm² or larger, 200 cm² or larger, 300 cm² or larger, 500 cm² or larger, 1000 cm² or larger, 1500 cm² or larger, or 2000 cm² or larger) without compromising the SOC's resistance to cracking and reliability.

When operating large stacks comprising such upscaled cell dimensions, an undesirable increase of temperature gradients within the cell stack may be observed, which, however, may be counteracted by providing one or more voltage or current fluctuations to the SOCs such that near-thermoneutral operation at part load is enabled by matching the integral Joule heat production with the integral reaction heat consumption inside said cells, as is disclosed in WO 2020/201485 A1.

It will be understood that the preferred features of the first to sixth embodiments may be freely combined in any combination, except for combinations where at least some of the features are mutually exclusive.

### EXAMPLES

### Preparation of Solid Electrolyte Sheets

Solid electrolyte sheets were prepared based on corrugated green sheets according to the method described in the following:

For each of the Examples 1 to 3, a commercially available, 159 µm thick 8YSZ-based green ceramic tape was used (purchased from Kerafol^{®}).

The corrugation was performed using 3D-printed corrugation plates that were manufactured using FDM (fused deposition modeling) printing with a polylactic acid (PLA) wire with a thickness of 0.1-0.2 mm.

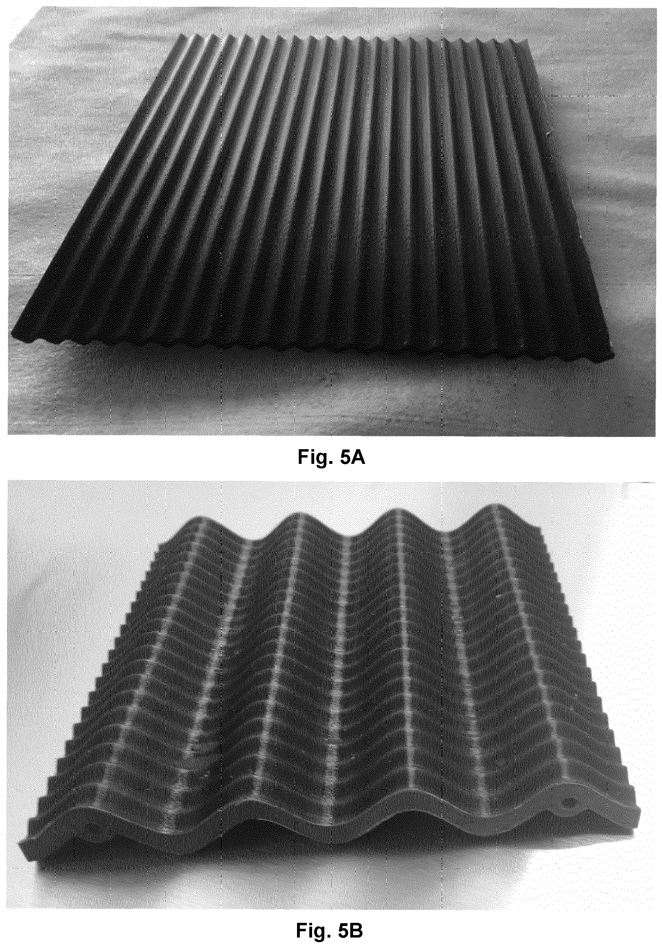

In order to minimize the plastic deformation within the tape upon corrugation, the process was divided into two steps. The initial step was to create the corrugation pattern for the first direction in the corrugated pattern (corrugation profile with relatively small period and/or amplitude) using a corrugation plate according to Figure 5A. Afterwards, the tape would be slid upon another corrugation plate with the full corrugation pattern as seen in Figure 5B, where corrugations with relatively large period and/or amplitude in the second direction, which is perpendicular to the first direction. In both cases, the alternating crests and troughs arranged along both the first direction of the surface and a second direction of the surface had a sinusoidal-like shape. The green sheet surface was conformed to the substrate corrugations by gently bending the same onto the prefabricated substrates by a roll mechanism (as illustrated in Figs. 4A and 4B). In this manner, non-sintered green sheets with three different corrugation patterns according to the following Table 1 have been prepared (Examples 1 to 3):

**Table 1**

| | Example 1 | Example 2 | Example 3 |
|---|---|---|---|
| Corrugation Pattern No. | A | B | C |
| Amplitude in First Direction [mm] | 1 | 2.25 | 1.2 |
| Period in First Direction [mm] | 7 | 15 | 8.7 |
| Amplitude in Second Direction [mm] | 7 | 6 | 6 |
| Period in Second Direction [mm] | 35 | 40 | 43.5 |
| Shrinkage to Plane [%] | 35.7 | 29.9 | 26.6 |

To obtain the desired properties of an SOC electrolyte, the green sheets of Examples 1 to 3 were subjected to debindering and sintering, resulting in a final area of 13.4x13.4 cm². The corrugation of the tapes withstood the debindering process, leaving the structure intact. For the sintering step, a ramp rate of 120°C/h was used for heating the corrugated tapes to 1450°C, where the temperature was held 12 hours before cooling down again. The sintered sheets of Examples 1 to 3 exhibited an average thickness of 75 µm corresponding to a shrinkage of 25% in z-direction

As Comparative Example 1, a commercially available, 159 µm thick 8YSZ green sheet (purchased from Kerafol^{®}) cut to a size of 9x9 cm² was subjected to the same sintering process. The sintered sheet of Comparative Example 1 exhibited an average thickness of 138 µm, corresponding to a shrinkage of 13% in z-direction.

### Evaluation

The sintered electrolyte sheets according to Examples 1 to 3 and Comparative Example 1 were visually inspected for flatness, in terms of bulge formation at the center section and curling at the edges. The results are shown in Table 2 below, wherein "++" denotes excellent, "+" denotes good, and "-" denotes poor flatness of the electrolytes.

**Table 2**

| | Corrugation Pattern Before Sintering | Area [cm²] | Flatness |
|---|---|---|---|
| Example 1 | A | 179.6 | + |
| Example 2 | B | 179.6 | + |
| Example 3 | C | 179.6 | ++ |
| Comparative Example 1 | None | 81 | - |

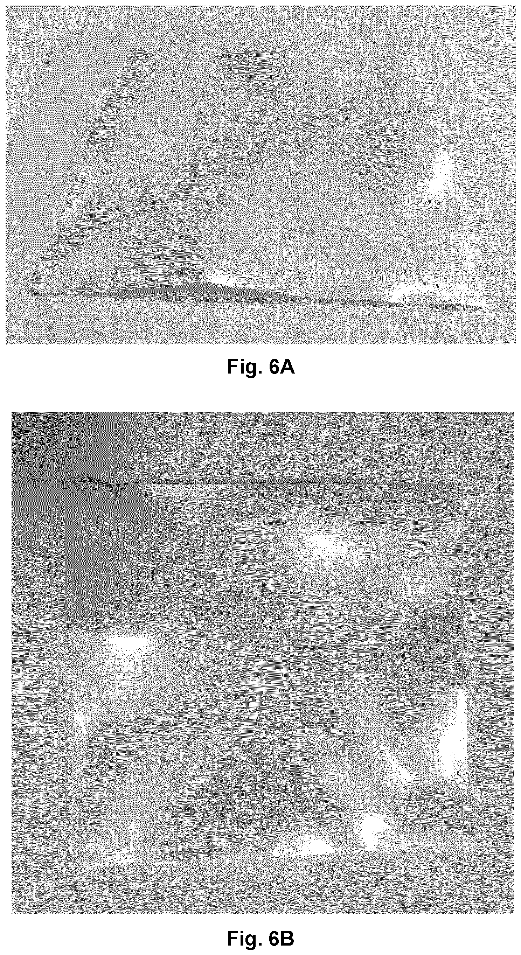

As is shown in the attached photographs according to Figures 6A and 6B, the sintering of the non-corrugated sample according to Comparative Example 1 shows substantial bulging and edge curl, which increases towards the center of the edge.

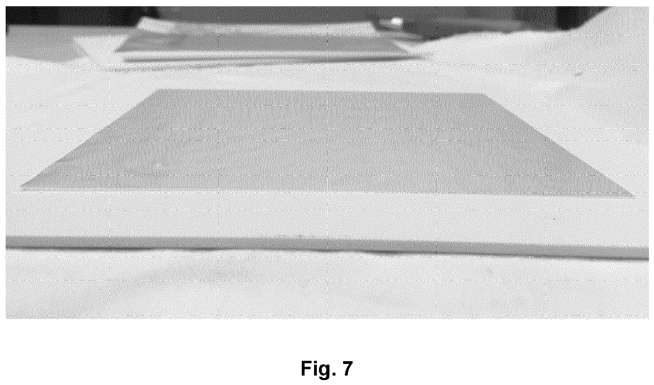

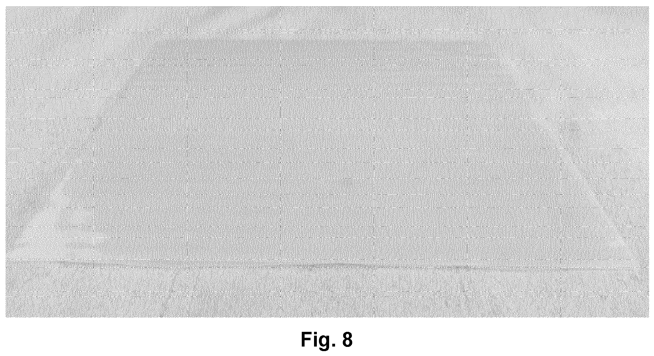

On the other hand, Examples 1 to 3 according to the present invention show significantly smaller bulges and edge curling and a superior flatness, despite of the substantially larger electrolyte dimensions. A photograph of each of the sintered sheets of Example 2 and 3 are shown in Fig. 7 and Fig. 8, respectively.

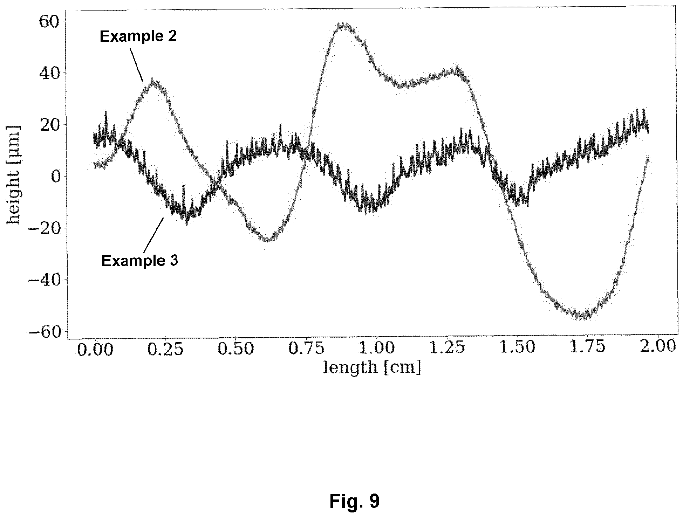

The sintered sheets of Examples 2 and 3 have been further subjected to a profilometric evaluation using a profilometer. The results shown in Fig. 9 demonstrate that the sheet of Example 3 is flatter when compared to that of Example 2, whereas Example 3 prepared from a green sheet with corrugation pattern C exhibits a higher surface roughness when compared to Example 2.

Overall, the above results show that non-sintered green sheet or tape comprising a corrugated surface may be successfully used for the preparation of large-sized flat electrolyte sheets which maintain their mechanical strength and reduce the danger of cracking due to bulging phenomena.

Once given the above disclosure, many other features, modifications, and improvements will become apparent to the skilled artisan.

## Claims

1. A non-sintered green sheet or tape for the preparation of a ceramic sheet material, comprising a corrugated surface having alternating crests and troughs arranged along both a first direction of the surface and a second direction of the surface, the second direction forming an angle of between 70° to 110° to the first direction,
wherein the corrugation periods and/or corrugation amplitudes in the first direction differ from those in the second direction.

2. The non-sintered green sheet or tape according to claim 1,
wherein the corrugation period in the second direction is larger than the corrugation period in the first direction, and
wherein the ratio of the corrugation period in the second direction to the corrugation period in the first direction is preferably at least 2:1, more preferably at least 2:1 to 40:1, further preferably at least 2.2:1, even further preferably between 2.2:1 to 30:1, and especially preferably between 2.5:1 and 20:1, such as between 3:1 and 12:1.

3. The non-sintered green sheet or tape according to any one of claims 1 or 2,
wherein the corrugation amplitude in the second direction is larger than the corrugation amplitude in the first direction, and
wherein the ratio of the corrugation amplitude in the second direction to the corrugation amplitude in the first direction is preferably at least 1.5:1, more preferably at least 1.8:1, further preferably at least 2:1, and especially preferably between 2:1 and 100:1, such as between 2:1 to 10:1.

4. The non-sintered green sheet or tape according to any one of claims 1 to 3,
wherein the corrugation amplitude in the second direction is 5 mm or larger, preferably 7 mm or larger, and/or
wherein the corrugation amplitude in the first direction is smaller than 5 mm, preferably smaller than 3 mm.

5. The non-sintered green sheet or tape according to any one of claims 1 to 4, wherein the thickness of the green sheet or tape is substantially constant and preferably in the range of 10 µm to 1 cm, further preferably from 30 µm to 0.7 cm, and especially preferably from 50 µm to 0.5 cm.

6. The non-sintered green sheet or tape according to any one of claims 1 to 5, wherein the corrugated surface covers the entire surface of the non-sintered green sheet or tape.

7. The non-sintered green sheet or tape according to any one of claims 1 to 6,
wherein the green sheet or tape comprises one or more selected from zirconia, zirconates, alumina, aluminates, titania, titanates, silica, silicates, rare earth metals and/or their oxides, alkali metals and/or their oxides, alkaline earth metals and/or their oxides, steels, stainless steels, aluminides, intermetallics, aluminum and its alloys, the first, second, and third transition series of metals, their oxides, borides, nitrides, carbides, silicides, and/or combinations thereof; and
optional additives selected from one or more of sintering aids, dispersants, binders, plasticizers, hardening agents, coalescing agents and solvents.

8. The non-sintered green sheet or tape according to any one of claims 1 to 7, wherein the alternating crests and troughs arranged along both a first direction of the surface and a second direction of the surface both have a sinusoidal-like shape.

9. Method of manufacturing a non-sintered green sheet or tape according to claims 1 to 8, comprising the steps of:
a1) providing a non-corrugated, non-sintered green sheet or tape;
a2) corrugating the non-sintered green sheet or tape to provide alternating crests and troughs arranged along the first direction of the surface of the non-sintered green sheet or tape; and
a3) corrugating the non-sintered green sheet or tape to provide alternating crests and troughs arranged along the second direction of the surface of the non-sintered green sheet or tape;
wherein steps a2) and a3) are performed in a roll-to-roll-process, or by conforming the non-sintered green sheet provided in step a1) to surface(s) of one or more prefabricated substrates comprising the corrugations in order to provide the corrugated, non-sintered green sheet or tape.

10. Method of manufacturing a ceramic sheet material, comprising the steps of:
a) providing a non-sintered green sheet or tape according to claim 9; and
b) subjecting the non-sintered green sheet or tape to a sintering step, optionally under reducing or oxidizing atmosphere.

11. Ceramic sheet material obtained by the method according to claim 10.

12. Ceramic sheet material according to claim 11,
wherein the area of the ceramic sheet material is 50 cm² or larger, preferably 200 cm² or larger, and more preferably 300 cm² or larger, such as 2000 cm² or larger; and/or
wherein the ceramic sheet material has a corrugation profile, wherein the corrugation amplitude in the second direction is 200 µm or less, preferably less than 100 µm, and especially preferably less than 50 µm and/or the corrugation amplitude in the first direction is 100 µm or less, preferably less than 50 µm, and more preferably less than 25 µm.

13. Electrolyte sheet comprising the ceramic sheet material according to any of claims 11 or 12.

14. Use of the non-sintered green sheet or tape according to any one of claims 1 to 8 for the preparation of an electrolyte sheet, a multilayer solid oxide cell, a ceramic filter or a ceramic membrane.

15. Solid oxide cell comprising the electrolyte sheet according to claim 13, a cathode layer disposed on one side of the electrolyte sheet, and an anode layer disposed on the other side of the electrolyte sheet.
